# EUROPÄISCHE PATENTSCHRIFT

(11) **EP 1 951 049 B1**
(45) Veröffentlichungstag und Bekanntmachung des Hinweises auf die Patenterteilung: **10.08.2011**
(21) Anmeldenummer: 06805824.7
(22) Anmeldetag: 23.09.2006
(51) Int. Cl.: A01N 43/40, A01N 25/02, A01N 25/04, A01N 47/36, A01N 47/38

(54) **ÖLSUSPENSIONSKONZENTRATE ENTHALTEND DIFLUFENICAN**
DIFLUFENICAN-CONTAINING OIL SUSPENSION CONCENTRATES
SUSPENSIONS CONCENTREES HUILEUSES ET CONTENANT DU DIFLUFENICAN

(30) Priorität: 08.10.2005 EP 05021997
(43) Veröffentlichungstag der Anmeldung: 06.08.2008
(73) Patentinhaber: BAYER CROPSCIENCE AG, 40789 Monheim (DE)
(72) Erfinder: SCHNABEL, Gerhard, 63820 Elsenfeld (DE); HAASE, Detlev, 65929 Frankfurt a.M. (DE)
(86) Internationale Anmeldenummer: PCT/EP2006/009261
(87) Internationale Veröffentlichungsnummer: WO 2007/042138

(56) Entgegenhaltungen:
- WO-A-03/020027
- WO-A-2005/011378
- WO-A-2005/011382
- US-A- 5 834 400
- LUCKHAM P F: "THE PHYSICAL STABILITY OF SUSPENSION CONCENTRATES WITH PARTICULAR REFERENCE TO PHARMACEUTICAL AND PESTICIDE FORMULATIONS" PESTICIDE SCIENCE, ELSEVIER APPLIED SCIENCE PUBLISHER. BARKING, GB, Bd. 25, Nr. 1, Januar 1989 (1989-01), Seiten 25-34, XP000068825 ISSN: 0031-613X

## Beschreibung

Die vorliegende Erfindung betrifft das Gebiet der Pflanzenschutzmittelformulierungen. Insbesondere betrifft die Erfindung Formulierungen in Form von Ölsuspensionskonzentraten, welche den herbiziden Wirkstoff Diflufenican enthalten.

Herbizide Wirkstoffe werden im Allgemeinen nicht in ihrer reinen Form eingesetzt. In Abhängigkeit von dem Anwendungsgebiet und der Anwendungsart, sowie von physikalischen, chemischen und biologischen Parametern werden die Wirkstoffe in Mischung mit üblichen Hilfs- und Zusatzstoffen als Wirkstoffformulierung eingesetzt. Auch die Kombinationen mit weiteren Wirkstoffen zur Erweiterung des Wirkungsspektrum und/oder zum Schutz der Kulturpflanzen (z.B. durch Safener, Antidote) sind bekannt.

Formulierungen von herbiziden Wirkstoffen sollten im Allgemeinen eine hohe chemische und physikalische Stabilität, eine gute Applizierbarkeit und Anwenderfreundlichkeit und eine breite biologische Wirkung mit hoher Selektivität aufweisen. Der herbizide Wirkstoff Diflufenican wird in mehreren Arten von Formulierungen angeboten, die je nach Verwendungszweck und Einsatzbedingungen verschiedene Vor- und Nachteile aufweisen. Aus WO 2005/011378 sind Ölsuspensionskonzentrate enthaltend Diflufenican und Lösungsmittel aus der Gruppe der Kohlenwasserstoffe bekannt. In der Anwendungspraxis hat sich jedoch gezeigt, daß diese - auch als OD-Formulierungen (Öl-Dispersionen) - bekannten Ölsuspensionskonzentrate den Nachteil aufweisen, daß beim Verdünnen mit Wasser - je nach Qualität des Wassers - häufig schwer redispergierbare Niederschläge auftreten, die zu Verstopfungen der Spritzdüsen führen.

Aufgabe der vorliegenden Erfindung bestand darin, Ölsuspensionskonzentrate für den Wirkstoff Diflufenican bereit zu stellen, die die oben genannten Nachteile nicht aufweisen.

Diese Aufgabe wird gelöst durch Diflufenican enthaltende Ölsuspensionskonzentrate, denen bestimmte Salze zugesetzt sind.

Die vorliegenden Erfindung betrifft somit Ölsuspensionskonzentrate enthaltend
a) Diflufenican,
b) ein oder mehrere Lösungsmittel aus der Gruppe der Kohlenwasserstoffe und Pflanzenöle,
c) ein oder mehrere nichttensidische Salze mehrwertiger Kationen, wobei das Löslichkeitsprodukt dieser Salze in Wasser höher ist, als das von Calciumsulfat,
d) ein oder mehrere Tenside,
e) einen oder mehrere Verdicker.

Die erfindungsgemäßen Dispersionen zeigen eine hervorragende Lagerstabilität und neigen auch bei Verdünnung mit weichem Wasser nicht zur Bildung schwer redispergierbarer Niederschläge.

Unter dem Begriff Ölsuspensionskonzentrat im Sinne der vorliegenden Erfindung wird ein Suspensionskonzentrat auf Basis der Lösungsmittel von Komponente b) (Kohlenwasserstoffe und/oder Pflanzenöle) verstanden. Dabei sind ein oder mehrere Wirkstoffe in den Lösungsmitteln suspendiert. Weitere Wirkstoffe können darin gelöst sein.

In dem erfindungsgemäßen Ölsuspensionskonzentrat liegt der herbizide Wirkstoff Diflufenican a) in suspendierter Form. Dies bedeutet, daß der Hauptanteil (in Gew.-%) an Diflufenican ungelöst in fein verteilter Form vorliegt, ein geringerer Teil an Diflufenican kann gelöst vorliegen. Vorzugsweise ist Diflufenican in den Lösungsmitteln b) zu mehr als 80 Gew.-%, besonders bevorzugt zu mehr als 90 Gew.-% suspendiert, jeweils bezogen auf die Gesamtmenge an Diflufenican in dem erfindungsgemäßen Ölsuspensionskonzentrat.

Der als Komponente a) enthaltene herbizide Wirkstoff Diflufenican ist bekannt und kommerziell erhältlich (siehe z.B. "The Pesticide Manual" 12. Auflage (2000), The British Crop Protection Council, Seite 296 - 297). In dem erfindungsgemäßen Ölsuspensionskonzentrat ist Diflufenican im Allgemeinen in einem Anteil von 0,5 bis 50 Gew.-%, vorzugsweise 2,5 bis 50 Gew.-% enthalten, dabei bezieht sich die Angabe "Gew.%" hier und in der gesamten Beschreibung, wenn nicht anders definiert, auf das relative Gewicht der jeweiligen Komponente bezogen auf das Gesamtgewicht der Formulierung.

In einer bevorzugten Ausführungsform enthalten diese Ölsuspensionskonzentrate
a) 0,5 bis 50% Diflufenican,
b) 5 bis 80% eines oder mehrerer Lösungsmittel,
c) 0,1 bis 15% eines oder mehrerer nichttensidischer Salze mehrwertiger Kationen,
d) 1 bis 50% eines oder mehrerer Tenside,
e) 0,1 bis 5% eines oder mehrerer Verdicker,
f) 0 bis 25% weitere Hilfs- und Zusatzstoffe.

In einer besonders bevorzugten Ausführungsform enthalten diese Ölsuspensionskonzentrate
a) 2,5 bis 50% Diflufenican,
b) 5 bis 80% eines oder mehrerer Lösungsmittel,
c) 0,1 bis 15% eines oder mehrerer nichttensidischer Salze mehrwertiger Kationen,
d) 1 bis 50% eines oder mehrerer Tenside,
e) 0,1 bis 5% eines oder mehrerer Verdicker,
f) 0 bis 25% weitere Hilfs- und Zusatzstoffe,
g) 0 bis 50% eines oder mehrerer weiterer von a) verschiedene agrochemische Wirkstoffe.

In einer ganz besonders bevorzugten Ausführungsform enthalten diese Ölsuspensionskonzentrate
a) 5 bis 35% Diflufenican,
b) 5 bis 80% eines oder mehrerer Lösungsmittel,
c) 0,5 bis 15% eines oder mehrerer nichttensidischer Salze mehrwertiger Kationen,
d) 5 bis 50% eines oder mehrerer Tenside,
e) 0,1 bis 5% eines oder mehrerer Verdicker,
f) 0 bis 25% weitere Hilfs- und Zusatzstoffe,
g) 0 bis 50% eines oder mehrerer weiterer von a) verschiedene agrochemische Wirkstoffe.

Alle %-Angaben sind Gewichtsprozente.

Unter dem Begriff "mehrwertige Kationen" sind Kationen zu verstehen, die mehr als eine Ladung tragen. Geeignete Kationen sind solche der Metalle der zweiten Haupt- und Nebengruppe und die der dritten Hauptgruppe des Periodensystems der chemischen Elemente. Besonders geeignet sind die der Erdalkalimetalle, wie Magnesium und Calcium, insbesondere Calcium.

Als Komponente b) sind ein oder mehrere Kohlenwasserstoffe beziehungsweise ein oder mehrere Pflanzenöle enthalten (siehe z.B. Römpp Lexikon Chemie, 10. Auflage, Band 3, Seite 2202 (1997), Georg Thieme Verlag Stuttgart / New York), bevorzugt solche, die bei Normalbedingungen flüssig sind. Die Kohlenwasserstoffe können acyclische (aliphatische) Kohlenwasserstoffe sein, oder cyclische Kohlenwasserstoffe, z.B. aromatische oder alicyclische (cycloaliphatische) Kohlenwasserstoffe.

Beispiele für Kohlenwasserstoffe b) sind:
1) aromatische Kohlenwasserstoffe, z.B.
   · ein- oder mehrfach alkyl-substituierte (z.B. ein-, zwei- oder dreifach (C₁-C₁₀)alkyl-substituierte) Aromaten, z.B. Benzole wie Toluol, Xylole, Mesitylen, Ethylbenzol, oder
   · Kohlenwasserstoffe mit kondensierten aromatischen Ringsystemen wie Naphthaline, z.B. 1-Methylnaphthalin, 2-Methylnaphthalin oder Dimethylnaphtalin, oder andere kondensierte aromatische Kohlenwasserstoffe wie Indan oder Tetralin,
2) cycloaliphatische Kohlenwasserstoffe, z.B.
   gesättigte oder ungesättigte, gegebenenfalls ein oder mehrfach alkyl-substituierte (z.B. ein-, zwei- oder dreifach (C₁-C₁₀)alkyl-substituierte) Cycloaliphaten wie Cycloalkane, Cycloalkene oder Cycloalkine, z.B. Cyclohexan oder Methylcyclopentan,
3) aliphatische Kohlenwasserstoffe, z.B.
   lineare oder verzweigte, gesättigte oder ungesättigte Aliphaten, bevorzugt C₅-C₁₆-Aliphaten, z.B. Alkane, Alkene oder Alkine, wie Pentan, Hexan, Octan, 2-Methylbutan oder 2,2,4-Trimethylpentan.

Als Komponente b) können auch Gemische eines oder mehrerer aromatischer Kohlenwasserstoffe und/oder eines oder mehrerer cycloaliphatischer Kohlenwasserstoffe und/oder eines oder mehrerer aliphatischer Kohlenwasserstoffe enthalten sein. Beispiele sind Gemische mehrerer aliphatischer Kohlenwasserstoffe, z.B. kommerziell erhältliche Lösungsmittel der EXXSOL^{®}D-Reihe, ISOPAR^{®}-Reihe oder BAYOL^{®}-Reihe z.B. Bayol^{®}82 (EXXONMOBIL CHEMICALS) oder der ISANE^{®}IP-Reihe oder HYDROSEAL^{®}G-Reihe (TOTALFINAELF), oder Gemische von aromatischen und aliphatischen Kohlenwasserstoffen, z.B. kommerziell erhältliche Lösungsmittel der SOLVESSO^{®}-Reihe z.B. Solvesso^{®}100, Solvesso^{®}150 oder Solvesso^{®}200 (EXXONMOBIL CHEMICALS), der SOLVARE^{®}/SOLVARO^{®}-Reihe (TOTALFINAELF) oder der Caromax^{®}-Reihe z.B. Caromax^{®}28 (Petrochem Carless).

Von den Kohlenwasserstoffen sind aliphatische bevorzugt, insbesondere gesättigte aliphatische Kohlenwasserstoffe wie C₅-C₁₆-Alkane, z.B. aus der Bayol^{®}-Reihe.

Geeignete Pflanzenöle sind allgemein bekannt und kommerziell erhältlich. Unter dem Begriff Pflanzenöle im Sinne der vorliegenden Erfindung werden z.B. Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl verstanden, wobei unter den Pflanzenölen auch deren Umesterungsprodukte verstanden werden, z.B. Alkylester wie Rapsölmethylester oder Rapsölethylester.

Beispiele für Pflanzenöle sind C₁₀-C₂₂-Fettsäure-Ester von Glycerin oder Glykol mit den C₁₀-C₂₂-Fettsäuren, oder C₁-C₂₀-Alkyl-C₁₀-C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Die Pflanzenöle können in den erfindungsgemäßen Ölsuspensionskonzentraten z.B. in Form kommerziell erhältlicher Pflanzenöle, insbesondere Rapsöle wie Rapsölmethylester, z.B. Phytorob®B (Novance, Frankreich), Edenor® MESU und Agnique®ME-Reihe (Cognis, Deutschland) Radia^{®}-Reihe (ICI), Prilube^{®}-Reihe (Petrofina) oder Biodiesel oder in Form kommerziell erhältlicher pflanzenölhaltiger Formulierungszusatzstoffe, insbesondere solcher auf Basis von Rapsölen wie Rapsölmethylester, z.B. Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Von den Pflanzenölen ist Rapsölmethylester bevorzugt.

Beispiele für synthetische Fettsäureester sind z.B. solche die sich von Fettsäuren mit ungerader Kohlenstoffatomanzahl ableiten, wie C₁₁-C₂₁-Fettsäureester.

Geeignete nichttensidische Salze c) mehrwertiger Kationen, deren Löslichkeitsprodukt in Wasser höher ist als das von Calciumsulfat sind beispielsweise die Alkylcarboxylate, Fluoride, Chloride, Nitrate, Nitrite, Hydrogencarbonate, Carbonate von Calcium und Magnesium. Besonders geeignet sind Calciumacetat, Calciumformiat, Calciumpropionat, Calciumfluorid, Calciumchlorid, Calciumnitrat, Calciumnitrit, Calciumhydrogencarbonat, Calciumcarbonat, Magnesiumacetat, Magnesiumformiat, Magnesiumpropionat, Magnesiumfluorid, Magnesiumchlorid, Magnesiumnitrat, Magnesiumnitrit, Magnesiumhydrogencarbonat und Magnesiumcarbonat. Ganz besonder eignet sind Calciumacetat, Calciumformiat, Calciumpropionat und Calciumchlorid.

Geeignete Tenside d) sind beispielsweise Tenside auf nichtaromatischer Basis, z.B. auf Heterocyclen-, Olefin-, Aliphaten- oder Cycloaliphatenbasis, beispielsweise oberflächenaktive mit einer oder mehreren Alkylgruppen substituierte und nachfolgend derivatisierte, z.B. alkoxylierte, sulfatierte, sulfonierte oder phosphatierte Pyridin-, Pyrimidin-, Triazin-, Pyrol-, Pyrolidin-, Furan-, Thiophen-, Benzoxazol-, Benzthiazol- und Triazolverbindungen, und/oder Tenside auf aromatischer Basis, z.B. mit einer oder mehreren Alkylgruppen substituierte und nachfolgend derivatisierte, z.B. alkoxylierte, sulfatierte, sulfonierte oder phosphatierte Benzole oder Phenole. Die Tenside d) sind im allgemeinen,in der Lösungsmittelphase löslich und geeignet, diese - zusammen mit darin gelösten Wirkstoffen - bei Verdünnung mit Wasser (zur Spritzbrühe) zu emulgieren beziehungsweise dispergieren. Geeignet sind auch Mischungen von nichtaromatischen und aromatischen Tensiden.

Beispiele für Tenside d) sind nachfolgend aufgeführt, worin EO für Ethylenoxid-, PO für Propylenoxid- und BO ein für Butylenoxid-Einheiten steht:
d1) C₁₀-C₂₄-Alkohole, die alkoxyliert sein können, z.B. mit 1 - 60 Alkylenoxideinheiten, vorzugsweise 1-60 EO und/oder 1-30 PO und/oder 1-15 BO in beliebiger Reihenfolge. Die terminalen Hydroxygruppen dieser Verbindungen können durch einen Alkyl-,Cycloalkyl-oder Acylrest mit 1-24 Kohlenstoffatomen endgruppen verschlossen sein. Beispiele für derartige Verbindungen sind:
   Genapol^{®}C-,L-,O-,T-,UD-,UDD-,X-Produkte von Clariant, Plurafac^{®}- und Lutensol^{®}A-,AT-,ON-,TO-Produkte von BASF, Marlipal^{®}24- und 013 Produkte von Condea, Dehypon^{®}-Produkte von Henkel, Ethylan^{®}-Produkte von Akzo-Nobel wie Ethylan CD 120.
d2) Anionische Derivate der unter b1) beschriebenen Produkte in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis) wie Genapol^{®}LRO, Sandopan^{®}-Produkte, Hostaphat/Hordaphos^{®}-Produkte von Clariant.
   Copolymere bestehend aus EO,PO und/oder BO Einheiten wie zum Beispiel Blockcopolymere wie die Pluronic^{®}-Produkte von der BASF und die Synperonic^{®}-Produkte von Uniquema mit einem Molekulargewicht von 400 bis 10⁸.
   Alkylenoxydaddukte von C₁ - C₉ Alkoholen wie Atlox^{®}5000 von Uniquema oder Hoe^{®}-S3510 von Clariant.
d3) Fettsäure- und Triglyceridalkoxylate wie die Serdox^{®}NOG-Produkte von Condea oder alkoxylierte Pflanzenöle wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, wobei unter den Pflanzenölen auch deren Umesterungsprodukte verstanden werden, z.B. Alkylester wie Rapsölmethylester oder Rapsölethylester, beispielsweise die Emulsogen^{®}-Produkte von Clariant, Salze von aliphatischen,cycloaliphatischen und olefinischen Carbonsäuren und Polycarbonsäuren, sowie Alpha-Sulfofettsäureester wie von Henkel erhältlich.
d4) Fettsäureamidalkoxylate wie die Comperlan^{®}-Produkte von Henkel oder die Amam^{®}-Produkte von Rhodia.
   Alkylenoxydaddukte von Alkindiolen wie die Surfynol^{®}-Produkte von Air Products. Zuckerderivate wie Amino- und Amidozucker von Clariant,Glukitole von Clariant, Alkylpolyglycoside in Form der APG^{®}-Produkte von Henkel oder wie Sorbitanester in Form der Span^{®}- oder Tween^{®}-Produkte von Uniquema oder Cyclodextrinester oder -ether von Wacker.
d5) Oberflächenaktive Cellulose- und Algin-, Pektin- und Guarderivate wie die Tylose^{®}-Produkte von Clariant,die Manutex^{®}-Produkte von Kelco und Guarderivate von Cesalpina.
   Alkylenoxydaddukte auf Polyolbasis wie Polyglykol^{®}-Produkte von Clariant. Grenzflächenaktive Polyglyceride und deren Derivate von Clariant.
d6) Alkansulfonate, Paraffin- und Olefinsulfonate wie Netzer IS^{®}, Hoe^{®}S1728, Hostapur^{®}OS, Hostapur^{®}SAS von Clariant.
d7) Alkylenoxidaddukte von Fettaminen, quartäre Ammonium-Verbindungen mit 8 bis 22 Kohlenstoffatomen (C₈-C₂₂) wie z.B. die Genamin^{®}C,L,O,T-Produkte von Clariant.
d8) Oberflächenaktive, zwitterionische Verbindungen wie Tauride, Betaine und Sulfobetaine in Form von Tegotain^{®}-Produkte von Goldschmidt, Hostapon^{®}T- und Arkopon^{®}T-Produkte von Clariant.
d9) Oberflächenaktive Verbindungen auf Silikon- bzw Silanbasis wie die Tegopren^{®}-Produkte von Goldschmidt und die SE^{®}-Produkte von Wacker, sowie die Bevaloid^{®}- ,Rhodorsil^{®}- und Silcolapse^{®}-Produkte von Rhodia (Dow Corning, Reliance, GE, Bayer).
d10) Per- oder polyfluorierte oberflächenaktive Verbindungen wie Fluowet^{®}-Produkte von Clariant, die Bayowet^{®}-Produkte von Bayer, die Zonyl^{®}-Produkte von DuPont und Produkte dieser Art von Daikin und Asahi Glass.
d11) Grenzflächenaktive Sulfonamide z.B. von Bayer.
d12) Grenzflächenaktive Polyacryl- und Polymethacrylderivate wie die Sokalan^{®}-Produkte von der BASF.
d13) Oberflächenaktive Polyamide wie modifizierte Gelatine oder derivatisierte Polyasparginsäure von Bayer und deren Derivate.
d14) Tensidische Polyvinylverbindungen wie modifiziertes Polyvinylpyrollidon wie die Luviskol^{®}-Produkte von BASF und die Agrimer^{®}-Produkte von ISP oder die derivatisierten Polyvinylacetate wie die Mowilith^{®}-Produkte von Clariant oder die -butyrate wie die Lutonal^{®}-Produkte von der BASF,die Vinnapas^{®}- und die Pioloform^{®}-Produkte von Wacker oder modifizierten, Polyvinylalkohole wie die Mowiol^{®}-Produkte von Clariant.
d15) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere wie die Agrimer^{®}-VEMA-Produkte von ISP.
d16) Oberfächenaktive Derivate von Montan-, Polyethylen-, und Polypropylenwachsen wie die Hoechst^{®}-wachse oder die Licowet^{®}-Produkte von Clariant.
d17) Oberflächenaktive Phosphonate und Phosphinate wie Fluowet^{®}-PL von Clariant.
d18) Poly- oder perhalogenierte Tenside wie beispielsweise Emulsogen^{®}-1557 von Clariant.
d19) Phenole, die alkoxyliert sein können, beispielsweise Phenyl-(C₁-C₄)alkyl-ether oder (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 1 bis 4 C-Atome aufweist, vorzugsweise mit 3 bis 10 mol Alkylenoxid umgesetztes Phenol, (Poly)alkylphenole oder (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol, Polyarylphenole oder Polyarylphenolalkoxylate [= Polyarylphenol-(poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol.
d20) Verbindungen, die formal die Umsetzungsprodukte der unter b20) beschriebenen Moleküle mit Schwefelsäure oder Phosphorsäure darstellen und deren mit geeigneten Basen neutralisierte Salze, beispielsweise der saure Phosphorsäureester des dreifach ethoxylierten Phenols, der saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol.
d21) Benzolsulfonate wie Alkyl- oder Arylbenzolsulfonate, z.B. saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öl-lösliche Salze wie beispielsweise das Calciumsalz oder das Isopropylammoniumsalz der Dodecylbenzolsulfonsäure.

Bei den Alkylenoxyeinheiten sind Ethylenoxy-, Propylenoxy- und Butylenoxyeinheiten, insbesondere Ethylenoxyeinheiten bevorzugt.

Beispiele für Tenside aus der Gruppe der Tenside auf nichtaromatischer Basis sind die Tenside der vorstehend genannten Gruppen d1) bis d18), vorzugsweise der Gruppen d1), d2), d6) und d7).

Beispiele für Tenside aus der Gruppe der Tenside auf Aromatenbasis sind die Tenside der vorstehend genannten Gruppen d19) bis d21) vorzugsweise mit 4 bis 10 mol Ethylenoxid umgesetztes Phenol, kommerziell beispielsweise in Form der Agrisol^{®}-Produkte (Akcros) erhältlich, mit 4 bis 50 mol Ethylenoxid umgesetztes Triisobutylphenol, kommerziell beispielsweise in Form der Sapogenat^{®} T-Produkte (Clariant) erhältlich, mit 4 bis 50 mol Ethylenoxid umgesetztes Nonylphenol, kommerziell beispielsweise in Form der Arkopal^{®}-Produkte (Clariant) erhältlich, mit 4 bis 150 mol Ethylenoxid umgesetztes Tristyrylphenol, beispielsweise aus der Soprophor^{®}-Reihe wie Soprophor^{®} FL, Soprophor^{®} 3D33, Soprophor^{®} BSU, Soprophor^{®} 4D-384, Soprophor^{®} CY/8 (Rhodia), und saures (lineares) Dodecylbenzolsulfonat, kommerziell beispielsweise in Form der Marlon^{®}-Produkte (Hüls) erhältlich.

Bevorzugte Tenside d) sind z.B. alkoxylierte C₁₀-C₂₄-Alkohole (d1) und deren anionische Derivate (d2) wie Sulfate, Sulfonate und Phosphate, alkoxylierte Pflanzenöle (d3), alkoxylierte Phenole (d19) und deren Umsetzungprodukte mit Schwefelsäure oder Phosphorsäure (d20) und Alkylbenzolsulfonate (d21).

Die in den erfindungsgemäßen Ölsuspensionskonzentraten enthaltenen üblichen Verdicker e) sowie Hilfs- und Zusatzstoffe f) sind dem Fachmann bekannt und werden beispielsweise in Standardwerken beschrieben: McCutcheon's "Detergents and Emulsifiers Annual", MC Publ. Corp., Ridgewood N.J.; Sisley and Wood, "Encyclopedia of Surface active Agents", Chem. Publ.Co.Inc., N.Y. 1964; Schönfeldt, "Grenzflächenaktive Äthylenoxidaddukte", Wiss. Verlagsgesellschaft, Stuttgart 1976; Winnacker-Küchler, "Chemische Technologie", Band 7, C.Hauser-Verlag, München, 4.Auflage 1986, Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963.

Geeignete Verdicker sind beispielsweise:
1) modifizierte natürliche Silikate, wie chemisch modifizierte Bentonite, Hectorite, Attapulgite, Montmorillonite, Smektite oder andere Silikatmineralien, wie Bentone® (Elementis), Attagel® (Engelhard), Agsorb® (Oil-Dri Corporation) oder Hectorite® (Akzo Nobel), bevorzugt Bentone®,
2) synthetische Silikate, wie Silikate der Sipemat®-, Aerosil®- oder Durosil®-Reihe (Degussa), der CAB-O-SIL®-Reihe (Cabot) oder der Van Gel-Reihe (R.T. Vanderbilt),
3) Verdicker auf Basis synthetischer Polymere, wie Verdicker der Thixin®- oder Thixatrol®-Reihe (Elementis) sowie Rhodopol® (Rhodia) und Kelzan® S (Kelco Corp.).

Als übliche Hilfs- und Zusatzstoffe f) können in den erfindungsgemäßen Dispersionen z.B. noch enthalten sein: Thixotropiermittel, Netz-, Anti-Drift-, Haft-, Penetrations-, Konservierungs- und Frostschutzmittel, Antioxidantien, Füllstoffe, Trägerstoffe, Farbstoffe, Riechstoffe, Entschäumer, Düngemittel, Adjuvantien, Verdunstungshemmer, sowie den pH-Wert und die Viskosität beeinflussende Mittel.

Geeignete Frostschutzmittel sind solche aus der Gruppe der Harnstoffe, Diole und Polyole, wie Ethylenglycol und Propylenglycol. Geeignete Entschäumer sind solche auf Basis von Siliconen. Geeignete strukturbildende Stoffe sind solche aus der Gruppe der Xanthane. Geeignete Konservierungsmittel, Farb- und Duftstoffe sind dem Fachmann bekannt.

Die erfindungsgemäßen Dispersionen können auch weitere agrochemische Wirkstoffe g) wie Herbizide, Fungizide, Insektizide und Safener enthalten. Diese Wirkstoffe sind dem Fachmann beispielsweise aus aus "The Pesticide Manual", 13. Auflage (2003), The British Crop Protection Council, bekannt. Bevorzugt sind Herbizide aus der Reihe der Sulfonylharnstoffe wie lodosulfuron-methyl (A1) und dessen Natriumsalz (A2), Mesosulfuron-methyl (A3) und dessen Natriumsalz (A4), Foramsulfuron (A5) und dessen Natriumsalz (A6), Flucarbazone (A7) und dessen Natriumsalz (A8), Propoxycarbazone (A9) und dessen Natriumsalz (A10), Ethoxysulfuron (A11) und dessen Natriumsalz (A12), Amidosulfuron (A13) und dessen Natriumsalz (A14) und Safener wie Mefenpyr-diethyl (S1), N-({4-[(Cyclopropylamino)carbonyl]phenyl}sulfonyl)-2-methoxybenzamid (S2), Isoxadifen-ethyl (S3) und Cloquintocet-mexyl (S4). N-({4-[(Cyclopropylamino)carbonyl]phenyl}sulfonyl)-2-methoxybenzamid (S2) ist beispielsweise aus WO 99/16744 bekannt.

Als besonders bevorzugte Beispiele seien erfindungsgemäße Ölsuspensionskonzentrate genannt, welche die nachfolgend genannten Komponenten enthalten, ohne dass dadurch eine Einschränkung erfolgen soll. Dabei bedeutet Bayol ein Lösungsmittel aus der Bayol^{®}-Reihe, vorzugsweise Bayol^{®}82 oder Bayol^{®}85. DFF bedeutet Diflufenican. RME bedeutet Rapsölmethylester.
DFF + Bayol®82 + RME + A1 + Calciumformiat + Bentone 34;
DFF + Bayol®82 + RME + A2 + Calciumformiat + Bentone 34;
DFF + Bayol®82 + RME + A3 + Calciumformiat + Bentone 34;
DFF + Bayol®82 + RME + A4 + Calciumformiat + Bentone 34;
DFF + Bayol®82 + RME + A5 + Calciumformiat + Bentone 34;
DFF + Bayol®82 + RME + A6 + Calciumformiat + Bentone 34;
DFF + Bayol®82 + RME + A7 + Calciumformiat + Bentone 34;
DFF + Bayol®82 + RME + A8 + Calciumformiat + Bentone 34;
DFF + Bayo®O82 + RME + A9 + Calciumformiat + Bentone 34;
DFF + Bayol®82 + RME + A10 + Calciumformiat + Bentone 34;
DFF + Bayol®82 + RME + A11 + Calciumformiat + Bentone 34;
DFF + Bayol®82 + RME + A12 + Calciumformiat + Bentone 34;
DFF + Bayol®82 + RME + A13 + Calciumformiat + Bentone 34;
DFF + Bayol®82 + RME + A14 + Calciumformiat + Bentone 34;

DFF + Bayol®82 + RME + A1 + S1 + Calciumformiat + Bentone 34;
DFF + Bayol®82 + RME + A1 + S2 + Calciumformiat + Bentone 34;
DFF + Bayol®82 + RME + A1 + S3 + Calciumformiat + Bentone 34;
DFF + Bayol®82 + RME + A1 + S4 + Calciumformiat + Bentone 34;

DFF + Bayol®82 + RME + A2 + S1 + Calciumformiat + Bentone 34;
DFF + Bayol®82 + RME + A2 + S2 + Calciumformiat + Bentone 34;
DFF + Bayol®82 + RME + A2 + S3 + Calciumformiat + Bentone 34;
DFF + Bayol®82 + RME + A2 + S4 + Calciumformiat + Bentone 34;

DFF + Bayol®82 + RME + A3 + S1 + Calciumformiat + Bentone 34;
DFF + Bayol®82 + RME + A3 + S2 + Calciumformiat + Bentone 34;
DFF + Bayol®82 + RME + A3 + S3 + Calciumformiat + Bentone 34;
DFF + Bayol®82 + RME + A3 + S4 + Calciumformiat + Bentone 34;

DFF + Bayol®82 + RME + A4 + S1 + Calciumformiat + Bentone 34;
DFF + Bayol®82 + RME + A4 + S2 + Calciumformiat + Bentone 34;
DFF + Bayol®82 + RME + A4 + S3 + Calciumformiat + Bentone 34;
DFF + Bayol®82 + RME + A4 + S4 + Calciumformiat + Bentone 34;

DFF + Bayol®82 + RME + A5 + S1 + Calciumformiat + Bentone 34;
DFF + Bayol®82 + RME + A5 + S2 + Calciumformiat + Bentone 34;
DFF + Bayol®82 + RME + A5 + S3 + Calciumformiat + Bentone 34;
DFF + Bayol®82 + RME + A5 + S4 + Calciumformiat + Bentone 34;

DFF + Bayol®82 + RME + A6 + S1 + Calciumformiat + Bentone 34;
DFF + Bayol®82 + RME + A6 + S2 + Calciumformiat + Bentone 34;
DFF + Bayol®82 + RME + A6 + S3 + Calciumformiat + Bentone 34;
DFF + Bayol®82 + RME + A6 + S4 + Calciumformiat + Bentone 34;

DFF + Bayol®82 + RME + A7 + S1 + Calciumformiat + Bentone 34;
DFF + Bayol®82 + RME + A7 + S2 + Calciumformiat + Bentone 34;
DFF + Bayol®82 + RME + A7 + S3 + Calciumformiat + Bentone 34;
DFF + Bayol®82 + RME + A7 + S4 + Calciumformiat + Bentone 34;

DFF + Bayol®82 + RME + A8 + S1 + Calciumformiat + Bentone 34;
DFF + Bayol®82 + RME + A8 + S2 + Calciumformiat + Bentone 34;
DFF + Bayol®82 + RME + A8 + S3 + Calciumformiat + Bentone 34;
DFF + Bayol®82 + RME + A8 + S4 + Calciumformiat + Bentone 34;

DFF + Bayol®82 + RME + A9 + S1 + Calciumformiat + Bentone 34;
DFF + Bayol®82 + RME + A9 + S2 + Calciumformiat + Bentone 34;
DFF + Bayol®82 + RME + A9 + S3 + Calciumformiat + Bentone 34;
DFF + Bayol®82 + RME + A9 + S4 + Calciumformiat + Bentone 34;

DFF + Bayol®82 + RME + A10 + S1 + Calciumformiat + Bentone 34;
DFF + Bayol®82 + RME + A10 + S2 + Calciumformiat + Bentone 34;
DFF + Bayol®82 + RME + A10 + S3 + Calciumformiat + Bentone 34;
DFF + Bayol®82 + RME + A10 + S4 + Calciumformiat + Bentone 34;

DFF + Bayol®82 + RME + A11 + S1 + Calciumformiat + Bentone 34;
DFF + Bayol®82 + RME + A11 + S2 + Calciumformiat + Bentone 34;
DFF + Bayol®82 + RME + A11 + S3 + Calciumformiat + Bentone 34;
DFF + Bayol®82 + RME + A11 + S4 + Calciumformiat + Bentone 34;

DFF + Bayol®82 + RME + A12 + S1 + Calciumformiat + Bentone 34;
DFF + Bayol®82 + RME + A12 + S2 + Calciumformiat + Bentone 34;
DFF + Bayol®82 + RME + A12 + S3 + Calciumformiat + Bentone 34;
DFF + Bayol®82 + RME + A12 + S4 + Calciumformiat + Bentone 34;

DFF + Bayol®82 + RME + A13 + S1 + Calciumformiat + Bentone 34;
DFF + Bayol®82 + RME + A13 + S2 + Calciumformiat + Bentone 34;
DFF + Bayol®82 + RME + A13 + S3 + Calciumformiat + Bentone 34;
DFF + Bayol®82 + RME + A13 + S4 + Calciumformiat + Bentone 34;

DFF + Bayol®82 + RME + A14 + S1 + Calciumformiat + Bentone 34;
DFF + Bayol®82 + RME + A14 + S2 + Calciumformiat + Bentone 34;
DFF + Bayol®82 + RME + A14 + S3 + Calciumformiat + Bentone 34;
DFF + Bayol®82 + RME + A14 + S4 + Calciumformiat + Bentone 34.

Die erfindungsgemäßen Ölsuspensionskonzentrate können durch bekannte Verfahren, z.B. durch Vermischen der Komponenten hergestellt werden. So kann z.B. die Komponente b) vorgelegt und die weiteren Komponenten a), d), c), e), f) und/oder g) zugegeben werden. Vor Zugabe der übrigen Komponenten kann die Komponente b) gegebenenfalls auch mit einem Verdicker vermischt werden. Die erhaltene Ölsuspension kann anschließend, gegebenenfalls nach einer Vorvermahlung, einer Feinvermahlung unterzogen werden.

Zur Herstellung der Mischungen können gängige Mischapparate verwendet werden, die gegebenenfalls temperiert werden. Zur Vorvermahlung können z.B. Hochdruckhomogenisatoren oder nach dem Rotor-Stator Prinzip arbeitende Mühlen verwendet werden, wie Ultraturax-Homogenisatoren, z.B. der Fa. IKA, oder Zahnkolloidmühlen, z.B. der Fa. Puck. Für die Feinvermahlung können z.B. diskontinuierliche Perlmühlen, z.B. der Fa. Drais oder kontinuierliche Perlmühlen, der z.B. Fa. Bachofen verwendet werden. Je nach den Eigenschaften der eingesetzten Komponenten, sowie verfahrens- und sicherheitstechnsichen Anforderungen und aus wirtschaftlichen Gründen, kann das Herstellverfahren angepaßt und gegebenenfalls auf eine Vorvermahlung oder auch auf eine Feinvermahlung verzichtet werden.

Die zur Herstellung eingesetzten Komponenten a) bis g) können Wasser als Nebenbestandteil enthalten, welches sich in den erfindungsgemäßen Ölsuspensionskonzentraten wiederfindet. Die erfindungsgemäßen Ölsuspensionskonzentrate können daher geringe Mengen von Wasser enthalten, im allgemeinen von 0 bis 5 Gew.%.

Zur Anwendung können die erfindungsgemäßen Ölsuspensionskonzentrate gegebenenfalls in üblicher Weise, z.B. zu Emulsionen, Suspensionen, Suspoemulsionen oder Dispersionen verdünnt werden, z.B. mittels Wasser. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche flüssigen herbiziden Mittel, erhältlich durch Verdünnen der erfindungsgemäßen Ölsuspensionskonzentrate.

Die erfindungsgemäßen herbiziden Mittel (im nachfolgenden stets auch die erfindungsgemäßen Ölsuspensionskonzentrate umfassend) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei können die Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen herbiziden Mitteln ist in der Regel günstig. Als besonderer Vorteil fällt ins Gewicht, daß die in den herbizide Mitteln verwendeten und wirksamen Dosierungen von herbiziden Verbindungen so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Mittel hinsichtlich der beschriebenen Eigenschaften deutlich übertroffen.

Obgleich die erfindungsgemäßen herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Bevorzugt ist die Anwendung der erfindungsgemäßen Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem Pflanzenwuchs (z.B. Schadpflanzen wie monokotyle oder dikotyle Unkräuter oder unerwünschte Kulturpflanzen), vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, wobei ein oder mehrere erfindungsgemäße herbizide Mittel auf die Pflanzen (z.B. Schadpflanzen), Pflanzenteile, das Saatgut (z.B. Pflanzensamen) oder die Fläche auf der die Pflanzen wachsen (z.B. die Anbaufläche) appliziert werden.

Die Pflanzenkulturen können auch gentechnisch verändert oder durch Mutationsselektion erhalten sein und sind bevorzugt tolerant gegenüber Acetolactatsynthase (ALS)-Inhibitoren.

Die Ölsuspensionskonzentrate der vorliegenden Erfindung weisen eine ausgezeichnete chemische Stabilität während der Herstellung und Lagerung auf und eignen sich insbesondere auch für Kombinationen von Wirkstoffen mit unterschiedlichen physikalisch-chemischen Eigenschaften. Außerdem weisen die Ölsuspensionskonzentrate eine ausgezeichnete physikalische Stabilität, eine gute Applizierbarkeit und Anwenderfreundlichkeit, sowie eine hohe biologische Effektivität und Selektivität auf.

Das nachfolgende Vergleichsbeispiel soll die Erfindung erläutern, ohne limitierenden Charakter zu haben.

### Erläuterung:

- Bentone^{®} 34: = modifiziertes Schichtsilikat, Elementis
- Edenor^{®} MESU: = Rapsölmethylester, Cognis
- Emulsogen^{®} EL-400: = polyethoxyliertes Rizinusöl mit 40 Einheiten Ethylenoxid, Clariant
- Triton^{®} GR-7M E: = Di(2-Ethylhexyl)sulfosuccinat Natriumsalz in aromatischem Lösungsmittel, Dow Chemicals
- Bayol^{®} 82: = Paraffinöl (Exxon)
- Genapol^{®} X060 Methylether =: Isotridecylalkohol mit 6 Einheiten Ethylenoxid, Methyl-endverschlossen (Clariant)

### Erfindungsgemäßes Ausführungsbeispiel 1:

| | | |
|---|---|---|
| a) | 14,85 % | Diflufenican |
| b) | 6,00 % | Edenor ME SU |
| b) | 0,20 % | Propylencarbonat |
| b) | 33,50% | Bayol 82 |
| c) | 3,50 % | Calciumformiat |
| d) | 19,80 % | Genapol X 060 (Methylether) |
| d) | 15,00 % | Triton GR-7M E |
| d) | 5,00 % | Emulsogen EL 400 |
| e) | 2,00 % | Bentone 34 |
| f) | 0,15 % | Natriumcarbonat |

In einer Vorlage wurden 33,5 g Bayol^{®} 82 vorgelegt und 2,0 g Bentone^{®} 34 zugesetzt. Nach Mischen mit einem Ultra-Turax^{®} wurden 0,2 g Propylencarbonat zugesetzt und mit dem Ultra-Turax^{®} bei hohen Schwerkräften zur Gelierung gebracht. Danach wurden 6 g Edenor^{®} MESU zugesetzt und wiederum mit hohen Schwerkräften eingearbeitet. Anschließend wurden 15 g Triton^{®} GR7ME und 5 g Emulsogen^{®} EL400 zugesetzt und wiederum mit dem Ultra-Turax^{®} eingearbeitet. Danach wurden 19,8 g Genapol^{®} X 060 Methylether, 0,15 g Natriumcarbonat, 3,5 g Calciumformiat und anschließend vorvermahlenes Diflufenican unter Mischen mit dem Ultra-Turax^{®} portionsweise zugesetzt, bis es völlig eingearbeitet war. Es wurde ein Ölsuspensionskonzentrat erhalten, welches anschließend über eine Dynomill^{®}-Mühle mit einer Drehzahl von ca. 3000 U/min und einer Austrittstemperatur von 25 - 30°C gefahren wurde. Nach der Vermahlung wurde das Ölsuspensionskonzentrat 20 Minuten nachgerührt und dann abgefüllt.

### Vergleichsbeispiel 2 (ohne Calciumformiat) :

| | | |
|---|---|---|
| a) | 14,85 % | Diflufenican |
| b) | 6,00 % | Edenor ME SU |
| b) | 0,20 % | Propylencarbonat |
| b) | 37,00% | Bayol 82 |
| d) | 19,80 % | Genapol X 060 (Methylether) |
| d) | 15,00 % | Triton GR-7M E |
| d) | 5,00 % | Emulsogen EL 400 |
| e) | 2,00 % | Bentone 34 |
| f) | 0,15 % | Natriumcarbonat |

Das zu Vergleichszwecken hergestellte Ölsuspensionskonzentrat wurde analog dem Beispiel 1 hergestellt, jedoch wurden 37,0 g Bayol 82 und kein Calciumformiat eingesetzt.

### Applikationstest: Redispergierbarkeit

Aus Wasser mit einer definierten Wasserhärte (20 und 100 ppm; hergestellt aus CIPAC Standard-Wasser D (342ppm) durch Verdünnung mit de-ionisiertem Wasser) und dem erfindungsgemäßen Ölsuspensionskonzentrat 1 bzw. dem Vergleichsbeispiel 2 werden bei Raumtemperatur je 250 ml eines 0,34 bzw. 1,22%igen Gemisches in einem 250ml Meßzylinder hergestellt.

Die Gemische werden durch 30 manuelle Inversionen (1 Inversion = Drehen um 180° und zurück) durchmischt. Anschließend lässt man für 24 h ruhig stehen. Nun werden nochmals 30 Inversionen durchgeführt, und nach 30 min. wird auf Sedimentbildung bonitiert: Im Fall des erfindungsgemäßen Ölsuspensionskonzentrats 1 wird keine Abscheidung (Sedimentbildung) beobachtet, d.h. das erfindungsgemäße Form Ölsuspensionskonzentrat 1 ist vollständig redispergierbar. Dagegen tritt im Fall von Vergleichsbeipiel 2 eine signifikante Sedimentbildung auf, d.h. Vergleichsbeipiel 2 ist nicht vollständig redispergierbar.

| Formulierung gemäß Beispiel | Konzentration | Wasserhärte | Ergebnis |
|---|---|---|---|
| 1 | 0,34 % | 20 | redispergierbar |
| 2 | 0,34 % | 20 | nicht redispergierbar |
| | | | |
| 1 | 0,34 % | 100 | redispergierbar |
| 2 | 0,34 % | 100 | nicht redispergierbar |
| | | | |
| 1 | 1,22 % | 20 | redispergierbar |
| 2 | 1,22 % | 20 | nicht redispergierbar |
| | | | |
| 1 | 1,22 % | 100 | redispergierbar |
| 2 | 1,22 % | 100 | nicht redispergierbar |

## Patentansprüche

1. Ölsuspensionskonzentrate, enthaltend
a) Diflufenican,
b) ein oder mehrere Lösungsmittel aus der Gruppe der Kohlenwasserstoffe und Pflanzenöle,
c) ein oder mehrere nichttensidische Salze mehrwertiger Kationen, wobei das Löslichkeitsprodukt dieser Salze in Wasser höher ist als das von Calciumsulfat,
d) ein oder mehrere Tenside, und
e) einen oder mehrere Verdicker.

2. Ölsuspensionskonzentrate gemäß Anspruch 1, enthaltend als Komponente ein oder mehrere Lösungsmittel aus der Gruppe umfassend acyclische Kohlenwasserstoffe, cyclische Kohlenwasserstoffe und Pflanzenöle.

3. Ölsuspensionskonzentrate gemäß Anspruch 1 oder 2, enthaltend
a) 0,5 bis 50% Diflufenican,
b) 5 bis 80% eines oder mehrerer Lösungsmittel,
c) 0,1 bis 15% eines oder mehrerer nichttensidischer Salze mehrwertiger Kationen,
d) 1 bis 50% eines oder mehrerer Tenside,
e) 0,1 bis 5% eines oder mehrerer Verdicker,
f) 0 bis 25% weitere Hilfs- und Zusatzstoffe.

4. Ölsuspensionskonzentrate gemäß einem oder mehreren der Ansprüche 1 bis 3, enthaltend
a) 2,5 bis 50% Diflufenican,
b) 5 bis 80% eines oder mehrerer Lösungsmittel,
c) 0,1 bis 15% eines oder mehrerer nichttensidischer Salze mehrwertiger Kationen,
d) 1 bis 50% eines oder mehrerer Tenside,
e) 0,1 bis 5% eines oder mehrerer Verdicker,
f) 0 bis 25% weitere Hilfs- und Zusatzstoffe, und
g) 0 bis 50% eines oder mehrerer weiterer von a) verschiedene agrochemische Wirkstoffe.

5. Ölsuspensionskonzentrate gemäß einem oder mehreren der Ansprüche 1 bis 4, enthaltend
a) 5 bis 35% Diflufenican,
b) 5 bis 80% eines oder mehrerer Lösungsmittel,
c) 0,5 bis 15% eines oder mehrerer nichttensidischer Salze mehrwertiger Kationen,
d) 5 bis 50% eines oder mehrerer Tenside,
e) 0,1 bis 5% eines oder mehrerer Verdicker,
f) 0 bis 25% weitere Hilfs- und Zusatzstoffe,
g) 0 bis 50% eines oder mehrerer weiterer von a) verschiedene agrochemische Wirkstoffe.

6. Ölsuspensionskonzentrate gemäß einem oder mehreren der Ansprüche 1 bis 5, enthaltend als weiteren agrochemischen Wirkstoff ein Herbizid aus der Gruppe lodosulfuron-methyl, lodosulfuron-methyl Natriumsalz, Mesosulfuron-methyl, Mesosulfuron-methyl Natriumsalz, Foramsulfuron, Foramsulfuron Natriumsalz, Flucarbazone, Flucarbazone Natriumsalz, Propoxycarbazone, Propoxycarbazone Natriumsalz, Ethoxysulfuron, Ethoxysulfuron Natriumsalz, Amidosulfuron und Amidosulfuron Natriumsalz.

7. Ölsuspensionskonzentrate gemäß einem oder mehreren der Ansprüche 1 bis 6, enthaltend als weiteren agrochemischen Wirkstoff einen Safener aus der Gruppe Mefenpyr-diethyl, N-({4-[(Cyclopropylamino)carbonyl]phenyl}sulfonyl)-2-methoxybenzamid, Isoxadifen-ethyl und Cloquintocet-mexyl.

8. Verfahren zur Herstellung eines Ölsuspensionskonzentrats gemäß einem oder mehreren der Ansprüche 1 bis 7, worin die Komponenten gemischt und gegebenenfalls vermahlen werden.

9. Verfahren zur Bekämpfung von unerwünschtem Pflanzenwuchs, worin eine wirksame Menge eines Ölsuspensionskonzentrats gemäß einem oder mehreren der Ansprüche 1 bis 7 auf die Pflanzen, Teile der Pflanzen, das Saatgut oder die Fläche auf der Pflanzen wachsen, appliziert wird.

10. Verwendung eines Ölsuspensionskonzentrats gemäß einem oder mehreren der Ansprüche 1 bis 7, zur Bekämpfung von unerwünschtem Pflanzenwuchs.

11. Verwendung eines Ölsuspensionskonzentrats gemäß einem oder mehreren der Ansprüche 1 bis 7, zur Herstellung eines herbiziden Mittels.

12. Verwendung gemäß Anspruch 10 oder 11, worin das herbizide Mittel eine Suspension, Suspoemulsion oder Dispersion ist.

13. Flüssiges herbizides Mittel, erhältlich durch Verdünnen eines Ölsuspensionskonzentrats gemäß einem oder mehreren der Ansprüche 1 bis 7.

14. Flüssiges herbizides Mittel gemäß Anspruch 13, worin das herbizide Mittel eine Emulsion, Suspension, Suspoemulsion oder Dispersion ist.

15. Flüssiges herbizides Mittel, enthaltend
a) Diflufenican
b) ein oder mehrere Lösungsmittel aus der Gruppe der Kohlenwasserstoffe und Pflanzenöle,
c) ein oder mehrere nichttensidische Salze mehrwertiger Kationen, wobei das Löslichkeitsprodukt dieser Salze in Wasser höher ist als das von Calciumsulfat,
d) ein oder mehrere Tenside,
e) einen oder mehrere Verdicker.

16. Flüssiges herbizides Mittel gemäß Anspruch 15, zusätzlich enthaltend als weiteren agrochemischen Wirkstoff ein Herbizid aus der Gruppe lodosulfuron-methyl, lodosulfuron-methyl Natriumsalz, Mesosulfuron-methyl, Mesosulfuron-methyl Natriumsalz, Foramsulfuron, Foramsulfuron Natriumsalz, Flucarbazone, Flucarbazone Natriumsalz, Propoxycarbazone, Propoxycarbazone Natriumsalz, Ethoxysulfuron, Ethoxysulfuron Natriumsalz, Amidosulfuron und Amidosulfuron Natriumsalz.

17. Flüssiges herbizides Mittel gemäß Anspruch 15 oder 16, zusätzlich enthaltend als weiteren agrochemischen Wirkstoff einen Safener aus der Gruppe Mefenpyr-diethyl, N-({4-[(Cyclopropylamino)carbonyl]phenyl}sulfonyl)-2-methoxybenzamid, Isoxadifen-ethyl und Cloquintocet-mexyl.

18. Flüssiges herbizides Mittel gemäß einem der Ansprüche 15 bis 17, zusätzlich enthaltend Wasser.

19. Verfahren zur Bekämpfung von unerwünschtem Pflanzenwuchs, worin eine wirksame Menge eines herbiziden Mittels gemäß einem oder mehreren der Ansprüche 13 bis 18 auf die Pflanzen, Teile der Pflanzen, das Saatgut oder die Fläche auf der Pflanzen wachsen, appliziert wird.

20. Verwendung eines herbiziden Mittels gemäß einem oder mehreren der Ansprüche 13 bis 18 zur Bekämpfung von unerwünschtem Pflanzenwuchs.

## Claims

1. An oil suspension concentrate which comprises
a) diflufenican,
b) one or more solvents from the group consisting of hydrocarbons and vegetable oils,
c) one or more nonsurfactant salts of polyvalent cations, the solubility product of these salts in water being higher than that of calcium sulfate,
d) one or more surfactants, and
e) one or more thickeners.

2. An oil suspension concentrate as claimed in claim 1, which comprises, as component b), one or more solvents from the group consisting of acyclic hydrocarbons, cyclic hydrocarbons and vegetable oils.

3. An oil suspension concentrate as claimed in claim 1 or 2, which comprises
a) 0.5 to 50% of diflufenican,
b) 5 to 80% of one or more solvents,
c) 0.1 to 15% of one or more nonsurfactant salts of polyvalent cations,
d) 1 to 50% of one or more surfactants,
e) 0.1 to 5% of one or more thickeners,
f) 0 to 25% of additional auxiliaries and additives.

4. An oil suspension concentrate as claimed in one or more of claims 1 to 3, which comprises
a) 2.5 to 50% of diflufenican,
b) 5 to 80% of one or more solvents,
c) 0.1 to 15% of one or more nonsurfactant salts of polyvalent cations,
d) 1 to 50% of one or more surfactants,
e) 0.1 to 5% of one or more thickeners,
f) 0 to 25% of additional auxiliaries and additives, and
g) 0 to 50% of one or more additional agrochemical active substances other than a).

5. An oil suspension concentrate as claimed in one or more of claims 1 to 4, which comprises
a) 5 to 35% of diflufenican,
b) 5 to 80% of one or more solvents,
c) 0.5 to 15% of one or more nonsurfactant salts of polyvalent cations,
d) 5 to 50% of one or more surfactants,
e) 0.1 to 5% of one or more thickeners,
f) 0 to 25% of additional auxiliaries and additives,
g) 0 to 50% of one or more additional agrochemical active substances other than a).

6. An oil suspension concentrate as claimed in one or more of claims 1 to 5, which comprises, as additional agrochemical active substance, a herbicide from the group consisting of iodosulfuron-methyl, iodosulfuron-methyl sodium salt, mesosulfuron-methyl, mesosulfuron-methyl sodium salt, foramsulfuron, foramsulfuron sodium salt, flucarbazone, flucarbazone sodium salt, propoxycarbazone, propoxycarbazone sodium salt, ethoxysulfuron, ethoxysulfuron sodium salt, amidosulfuron and amidosulfuron sodium salt.

7. An oil suspension concentrate as claimed in one or more of claims 1 to 6, which comprises, as additional agrochemical active substance, a safener from the group consisting of mefenpyr-diethyl, N-({4-[(cyclopropylamino)carbonyl]phenyl}-sulfonyl)-2-methoxybenzamide, isoxadifen-ethyl and cloquintocet-mexyl.

8. A process for the preparation of an oil suspension concentrate as claimed in one or more of claims 1 to 7, which comprises mixing and optionally milling the components.

9. A process for combating undesirable plant growth, which comprises applying an effective amount of an oil suspension concentrate as claimed in one or more of claims 1 to 7 to the plants, parts of the plants, the seed or the area on which plants grow.

10. The use of an oil suspension concentrate as claimed in one or more of claims 1 to 7 for combating undesirable plant growth.

11. The use of an oil suspension concentrate as claimed in one or more of claims 1 to 7 for preparing a herbicidal composition.

12. The use as claimed in claim 10 or 11, the herbicidal composition being a suspension, suspoemulsion or dispersion.

13. A liquid herbicidal composition, which can be obtained by diluting an oil suspension concentrate as claimed in one or more of claims 1 to 7.

14. A liquid herbicidal composition as claimed in claim 13, the herbicidal composition being an emulsion, suspension, suspoemulsion or dispersion.

15. A liquid herbicidal composition, which comprises
a) diflufenican,
b) one or more solvents from the group consisting of hydrocarbons and vegetable oils,
c) one or more nonsurfactant salts of polyvalent cations, the solubility product of these salts in water being higher than that of calcium sulfate,
d) one or more surfactants,
e) one or more thickeners.

16. A liquid herbicidal composition as claimed in claim 15, which additionally comprises, as additional agrochemical active substance, a herbicide from the group consisting of iodosulfuron-methyl, iodosulfuron-methyl sodium salt, mesosulfuron-methyl, mesosulfuron-methyl sodium salt, foramsulfuron, foramsulfuron sodium salt, flucarbazone, flucarbazone sodium salt, propoxycarbazone, propoxycarbazone sodium salt, ethoxysulfuron, ethoxysulfuron sodium salt, amidosulfuron and amidosulfuron sodium salt.

17. A liquid herbicidal composition as claimed in claim 15 or 16, which additionally comprises, as additional agrochemical active substance, a safener from the group consisting of mefenpyr-diethyl, N-({4-[(cyclopropylamino)carbonyl]phenyl}sulfonyl)-2-methoxybenzamide, isoxadifen-ethyl and cloquintocet-mexyl.

18. A liquid herbicidal composition as claimed in any of claims 15 to 17, which additionally comprises water.

19. A process for combating undesirable plant growth, which comprises applying an effective amount of a herbicidal composition as claimed in one or more of claims 13 to 18 to the plants, parts of the plants, the seed or the area on which plants grow.

20. The use of a herbicidal composition as claimed in one or more of claims 13 to 18 for combating undesirable plant growth.

## Revendications

1. Concentrés de suspensions huileuses contenant
a) du diflufénican,
b) un ou plusieurs solvants du groupe des hydrocarbures et des huiles végétales,
c) un ou plusieurs sels non tensioactifs de cations polyvalents, le produit de solubilité de ces sels dans l'eau étant supérieur à celui du sulfate de calcium,
d) un ou plusieurs tensioactifs, et
e) un ou plusieurs épaississants.

2. Concentrés de suspensions huileuses selon la revendication 1 contenant comme constituant un ou plusieurs solvants du groupe comprenant des hydrocarbures acycliques, des hydrocarbures cycliques et des huiles végétales.

3. Concentrés de suspensions huileuses selon la revendication 1 ou 2 contenant
a) de 0,5 à 50 % de diflufénican,
b) de 5 à 80 % d'un ou plusieurs solvants,
c) de 0,1 à 15 % d'un ou plusieurs sels non tensioactifs de cations polyvalents,
d) de 1 à 50 % d'un ou plusieurs tensioactifs,
e) de 0,1 à 5 % d'un ou plusieurs épaississants,
f) de 0 à 25 % d'autres auxiliaires et additifs.

4. Concentrés de suspensions huileuses selon l'une ou plusieurs des revendications 1 à 3 contenant
a) de 2,5 à 50 % de diflufénican,
b) de 5 à 80 % d'un ou plusieurs solvants,
c) de 0,1 à 15 % d'un ou plusieurs sels non tensioactifs de cations polyvalents,
d) de 1 à 50 % d'un ou plusieurs tensioactifs,
e) de 0,1 à 5 % d'un ou plusieurs épaississants,
f) de 0 à 25 % d'autres auxiliaires et additifs, et
g) de 0 à 50 % d'un ou plusieurs autres principes actifs agrochimiques différents de a).

5. Concentrés de suspensions huileuses selon une ou plusieurs des revendications 1 à 4, contenant
a) de 5 à 35 % de diflufénican,
b) de 5 à 80 % d'un ou plusieurs solvants,
c) de 0,5 à 15 % d'un ou plusieurs sels non tensioactifs de cations polyvalents,
d) de 5 à 50 % d'un ou plusieurs tensioactifs,
e) de 0,1 à 5 % d'un ou plusieurs épaississants,
f) de 0 à 25 % d'autres auxiliaires et additifs,
g) de 0 à 50 % d'un ou plusieurs autres principes actifs agrochimiques différents de a).

6. Concentrés de suspensions huileuses selon l'une ou plusieurs des revendications 1 à 5 contenant comme autres principes actifs agrochimiques un herbicide du groupe constitué par l'iodosulfuron-méthyle, un sel de sodium d'iodosulfuron-méthyle, le mésosulfuron-méthyle, un sel de sodium de mésosulfuron-méthyle, le foramsulfuron, un sel de sodium de foramsulfuron, la flucarbazone, un sel de sodium de flucarbazone, la propoxycarbazone, un sel de sodium de propoxycarbazone, l'éthoxysulfuron, un sel de sodium d'éthoxysulfuron, l'amidosulfuron et un sel de sodium d'amidosulfuron.

7. Concentrés de suspensions huileuses selon une ou plusieurs des revendications 1 à 6 contenant comme autres principes actifs agrochimiques un phytoprotecteur du groupe constitué par le méfenpyr-diéthyle, le N-({4-[(cyclopropylamino)carbonyl]phényl}sulfonyl)-2-méthoxybenzamide, l'isoxadifen-éthyle et le cloquintocet-mexyl.

8. Procédé pour la préparation d'un concentré de suspension huileuse selon une ou plusieurs des revendications 1 à 7, dans lequel les constituants sont mélangés et éventuellement moulus.

9. Procédé pour combattre une croissance de plantes non souhaitées, dans lequel on applique une quantité efficace d'un concentré de suspension huileuse selon une ou plusieurs des revendications 1 à 7 sur les plantes, les parties des plantes, la semence ou la surface sur laquelle les plantes poussent.

10. Utilisation d'un concentré de suspension huileuse selon une ou plusieurs des revendications 1 à 7 pour combattre une croissance de plantes non souhaitées.

11. Utilisation d'un concentré de suspension huileuse selon une ou plusieurs des revendications 1 à 7 pour la préparation d'un agent herbicide.

12. Utilisation selon la revendication 10 ou 11, dans laquelle l'agent herbicide est une suspension, une suspo-émulsion ou une dispersion.

13. Agent herbicide liquide obtenu par dilution d'un concentré de suspension huileuse selon une ou plusieurs des revendications 1 à 7.

14. Agent herbicide liquide selon la revendication 13, dans lequel l'agent herbicide est une émulsion, une suspension, une suspo-émulsion ou une dispersion.

15. Agent herbicide liquide contenant
a) du diflufénican
b) un ou plusieurs solvants du groupe des hydrocarbures et des huiles végétales,
c) un ou plusieurs sels non tensioactifs de cations polyvalents, le produit de solubilité de ces sels dans l'eau étant supérieur à celui du sulfate de calcium,
d) un ou plusieurs tensioactifs,
e) un ou plusieurs épaississants.

16. Agent herbicide liquide selon la revendication 5 contenant de plus comme autres principes actifs agrochimiques un herbicide du groupe constitué par l'iodosulfuron-méthyle, un sel de sodium d'iodosulfuron-méthyle, le mésosulfuron-méthyle, un sel de sodium de mésosulfuron-méthyle, le foramsulfuron, un sel de sodium de foramsulfuron, la flucarbazone, un sel de sodium de flucarbazone, la propoxycarbazone, un sel de sodium de propoxycarbazone, l'éthoxysulfuron, un sel de sodium d'éthoxysulfuron, l'amidosulfuron et un sel de sodium d'amidosulfuron.

17. Agent herbicide liquide selon la revendication 15 ou 16 contenant de plus comme autres principes actifs agrochimiques un phytoprotecteur du groupe constitué par le méfenpyr-diéthyle, le N-({4-[(cyclopropylamino)carbonyl]phényl}sulfonyl)-2-méthoxybenzamide, l'isoxadifen-éthyle et le cloquintocet-mexyl.

18. Agent herbicide liquide selon l'une des revendications 15 à 17 contenant de plus de l'eau.

19. Procédé pour combattre une croissance de plantes non souhaitée, dans lequel on applique une quantité efficace d'un agent herbicide selon une ou plusieurs des revendications 13 à 18 sur les plantes, les parties des plantes, la semence ou la surface sur laquelle les plantes poussent.

20. Utilisation d'un agent herbicide selon une ou plusieurs des revendications 13 à 18 pour combattre une croissance de plantes non souhaitée.
